# DEMANDE DE BREVET EUROPEEN

(11) **EP 0 708 319 A1**
(43) Date de publication de la demande: **24.04.1996**
(21) Numéro de dépôt: 95402334.7
(22) Date de dépôt: 19.10.1995
(51) Int. Cl.: G01L 5/10

(54) **Dispositif de mesure des efforts de traction dans un câble de treuil**

(30) Priorité: 21.10.1994 FR 9412776
(71) Demandeur: BRISSONNEAU ET LOTZ MARINE Société anonyme dite:, F-44470 Carquefou-Nantes (FR)
(72) Inventeur: Desprez, François, F-44470 Thouare (FR)
(74) Mandataire: Phélip, Bruno

(57) **Abrégé**

Le dispositif de mesure comporte, en aval du réa suiveur (5), un rouleau (7) porté par un arbre (8), lequel arbre est solidaire à ses extrémités, de manetons (9) qui sont articulés sur le bâti (3) du treuil, autour d'axes (10).

Des capteurs (11) positionnés chacun sur une plateforme (12) aménagée sur le bâti (3), sont interposés entre ce dernier et chaque maneton (9).

La position de chaque capteur (11) est réglable par rapport au bâti (3), pour faire varier à volonté la longueur du bras de levier des manetons (9) qui transmettent les efforts qui s'exercent sur le rouleau (7) sous l'effet des variations de tension dans le câble (4).

## Description

La présente invention concerne un dispositif de mesure des efforts de traction qui s'exercent sur un câble de treuil comme, par exemple, sur un câble utilisé dans le domaine de la pêche à bord d'un chalutier.

Un dispositif de ce genre est décrit dans le document EP-A-0 346 318. Il est constitué, en aval du treuil, d'un rouleau sur lequel passe le câble. Les variations de tension dans le câble provoquent une réaction au niveau du rouleau. Cette réaction est mesurée et traduite en effort de traction.

Ce rouleau est en fait disposé en aval d'un réa suiveur qui permet de maintenir constant l'angle d'enroulement du câble sur le rouleau de mesure. Ce réa encaisse les variations d'efforts dues aux variations du diamètre de l'enroulement du câble sur le tambour.

La mesure de l'effort grâce au rouleau est ainsi indépendante du diamètre d'enroulement du câble sur le tambour.

La présente invention propose un perfectionnement au montage du rouleau de mesure sur le treuil de façon à améliorer la rigidité de l'arbre de mesure et à améliorer sa résistance face à d'éventuels efforts accidentels.

L'invention permet également d'offrir une possibilité de réglage aisé du gain des capteurs.

Le dispositif de mesure selon l'invention comporte des moyens de soutènement de l'arbre du rouleau de mesure qui sont constitués de manetons articulés sur le bâti du treuil, lesquels manetons sont soutenus au moyen de capteurs d'efforts interposés entre eux et ledit bâti.

Toujours selon l'invention, les manetons sont positionnés de façon sensiblement horizontale et leur articulation sur le bâti se situe en aval de l'arbre du réa.

Toujours selon l'invention, les capteurs d'efforts sont positionnés sur le bâti de façon à pouvoir être déplacés sous les manetons pour faire varier le bras de levier et adapter le gain des capteurs selon les besoins.

L'invention sera encore détaillée à l'aide de la description suivante et des dessins annexés donnés à titre indicatif et dans lesquels :
- la figure 1 est une vue schématique de dessus d'un treuil muni de son dispositif de mesure selon l'invention ;
- la figure 2 est une vue schématique partielle en élévation, du dispositif de mesure.

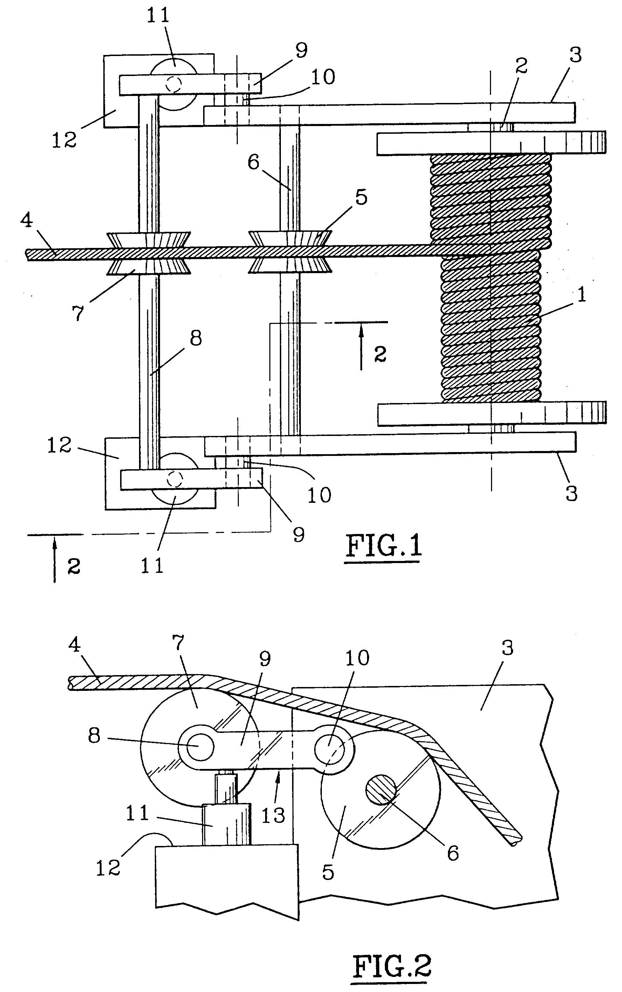

Le treuil représenté figure 1 comprend un tambour 1 soutenu, par l'intermédiaire d'un arbre 2, dans un bâti 3 représenté schématiquement, par deux plaques.

Le câble 4 est enroulé sur le tambour 1 en une ou plusieurs couches selon le cas. Ce câble est guidé, en sortie de tambour, par un réa 5. Ce réa 5 est monté sur un arbre 6 et il est guidé pour se déplacer transversalement sur l'arbre 6 au fur et à mesure du déplacement du câble sur le tambour 1.

L'arbre 6 du réa 5 est monté sur le bâti 3 du treuil.

Le dispositif de mesure proprement dit comprend un rouleau 7 disposé en aval du réa 5. Ce rouleau 7 est porté par un arbre 8 et il est par exemple mobile sur cet arbre 8, comme le réa suiveur 5, pour se déplacer transversalement au fur et à mesure du mouvement du câble 4 par rapport au tambour 1.

L'arbre 8 est porté au niveau de chacune de ses extrémités, par des manetons 9, ou bielles. Ces manetons 9 sont articulés sur le bâti 3 autour d'axes 10.

Les manetons 9 ont une position sensiblement horizontale. L'axe d'articulation 10 de ces manetons par rapport au bâti 3 est situé entre les arbres 6 et 8, au-dessus du niveau de l'arbre 6.

Chaque maneton 9 est supporté par un capteur d'effort 11. Ce capteur 11 est disposé sur une plateforme 12 aménagée sur le bâti 3. Cette plateforme 12 est horizontale. La surface inférieure 13 du maneton 9 est, lorsque le rouleau de mesure 7 est en position normale de repos, parallèle à cette plateforme 12.

Des moyens de réglage, non représentés, permettent de faire varier la position du capteur 11 sous le maneton 9. Ce réglage de la position du capteur 11 permet de modifier la longueur du bras de levier qui s'applique sur ces capteurs, et d'en modifier le gain de façon très simple.

Cette construction qui consiste à solidariser l'arbre 8 du tambour de mesure sur le bâti 3 au moyen des manetons 9, procure une grande rigidité à cet ensemble et lui permet de mieux résister aux efforts accidentels pouvant s'exercer sur le câble 4 lors des opérations de chalutage par exemple.

## Revendications

1. Dispositif de mesure des efforts de traction dans un câble (4) de treuil qui est guidé sur un réa suiveur (5), du type comportant, en aval de ce réa (5), un rouleau de mesure (7), porté par un arbre (8), caractérisé en ce que ledit arbre (8) est solidaire, à ses extrémités, de manetons (9) qui sont articulés sur le bâti (3) du treuil, lesquels manetons (9) sont soutenus au moyen de capteurs d'efforts (11) interposés entre ces manetons et ledit bâti.

2. Dispositif de mesure selon la revendication 1, caractérisé en ce que les manetons (9) sont positionnés sensiblement à l'horizontale et sont articulés chacun, autour d'un axe (10) situé entre l'arbre (6) du réa (5) et l'arbre (8) du tambour (7), lequel axe (10) se situant au-dessus du niveau dudit arbre (6).

3. Dispositif de mesure selon l'une quelconque des revendications 1 ou 2, caractérisé en ce que les capteurs (11) sont positionnés sur une plateforme (12) qui est parallèle à la surface inférieure (13) des manetons (9).

4. Dispositif de mesure selon la revendication 3, caractérisé en ce qu'il comporte des moyens de réglage permettant de faire varier la position des capteurs (11) par rapport aux manetons (9) et en particulier par rapport à l'axe (10) pour faire varier la longueur du bras de levier qui transmet l'effort s'exerçant sur le rouleau (7).
